Europäisches Patentamt

European Patent Office

Office européen des brevets

(19)

(11) Veröffentlichungsnummer: **0 289 057 B1**

(12) # EUROPÄISCHE PATENTSCHRIFT

(45) Veröffentlichungstag der Patentschrift:
12.06.91 Patentblatt 91/24

(51) Int. Cl.$^5$: **C02F 11/12, B01D 19/00**

(21) Anmeldenummer: 88106958.7

(22) Anmeldetag: 30.04.88

(54) Verfahren und Vorrichtung zur Behandlung von ausgefaultem Klärschlamm.

(30) Priorität: 01.05.87 DE 3714591

(43) Veröffentlichungstag der Anmeldung:
02.11.88 Patentblatt 88/44

(45) Bekanntmachung des Hinweises auf die
Patenterteilung:
12.06.91 Patentblatt 91/24

(84) Benannte Vertragsstaaten:
CH DE FR GB IT LI NL SE

(56) Entgegenhaltungen:
DE-A- 2 120 032
FR-A- 2 334 409
FR-A- 2 428 614
US-A- 3 517 487

(73) Patentinhaber: LIMUS UMWELTTECHNIK
GMBH
Sickingenstrasse 9-13
W-1000 Berlin 21 (DE)

(72) Erfinder: Koglin, Bodo Dr.
Alazeile 6
W-1000 Berlin 27 (DE)
Erfinder: Franke, Manfred Dr.
Veltheimstrasse 47b
W-1000 Berlin 28 (DE)
Erfinder: Dauben, Rainer
Wilkestrasse 15a
W-1000 Berlin 27 (DE)

(74) Vertreter: Patentanwälte RUFF, BEIER und
SCHÖNDORF
Neckarstrasse 50
W-7000 Stuttgart 1 (DE)

## Beschreibung

Die Erfindung betrifft ein Verfahren und eine Vorrichtung zur Behandlung von ausgefaultem Klärschlamm.

Der bei der Abwasserreinigung anfallende Klärschlamm wird auf größeren Klärwerken im allgemeinen vor seiner Beseitigung in flüssiger Form oder weiterer Entwässerung einer anaeroben Behandlung, kurz Faulung genannt, unterworfen. Bei einer Aufenthaltszeit zwischen 15 und 30 Tagen und meist auf 35°C erhöhter Temperatur geht er dabei durch biologischen Abbau in eine relativ stabile, nicht mehr ekelerregende und nicht stinkende Form über. Gleichzeitig wird wertvolles Faulgas gewonnen. Ferner verringern sich die organischen Inhaltsstoffe des Schlammes um etwa die Hälfte. Es liegt daher nahe anzunehmen, daß sich auch das Volumen des ausgefaulten Schlammes gegenüber dem des Rohschlammes entsprechend reduzieren läßt. Infolgedessen sind hinter vielen Faulanlagen dafür bestimmte Vorrichtungen, nämlich besondere Eindicker, installiert worden, die Nacheindicker genannt werden. In diesen, nach dem Stand der Technik (vgl. Lehr- und Handbuch der Abwassertechnik, Bd. III, 2. Aufl., 1978, S. 95ff, Hsgbr. ATV, Verl. W. Ernst & Sohne, Berlin, München, Düsseldorf) dimensionierten Eindickern beträgt die Aufenthaltszeit der Feststoffe mehrere Tage.

Es hat sich gezeigt, daß solche Nacheindicker oder ähnliche Vorrichtungen nur in seltenen Fällen die in sie gesetzten Erwartungen erfüllen. Meist bildet sich eine teilweise sehr feste Schwimmschlammdecke, so daß in den Eindickern drei mehr oder weniger scharf voneinander getrennte Zonen beobachtet werden können :

1. unten die gewünschte Bodenschlammschicht,
2. in der Mitte eine Schicht mit relativ geringem Feststoffgehalt,
3. oben die bereits erwähnte Schwimmschlammschicht.

Der bestimmungsgemäße Abzug von Dekantat ist unter diesen Umständen nicht möglich. Nachgeschaltete Schlammbehandlungsstufen werden infolgedessen stark beeinträchtigt, zum einen, weil sie wesentlich mehr als geplant Flüssigkeitsvolumen zu verarbeiten haben ; zum anderen, weil die Konzentration der abgezogenen Flüssigkeit stark schwankt, je nachdem aus welcher Zone sie entnommen wurde.

Man hat daher auf vielen Anlagen auf eine Faulschlamm-Nacheindickung völlig verzichtet und die dafür vorgesehenen Apparate durch den Einbau von Rührwerken und ähnlichem in einfache Misch- und Stapelbehälter umgewandelt.

Die Ursachen für das Versagen der Nacheindicker werden im allgemeinen auf unzulänglich ausgefaulten Schlamm zurückgeführt. Tatsächlich kann man Gasblasen beobachten, die die Schwimmschlammdecke durchbrechen und offenbar für deren Bildung und Aufrechterhaltung verantwortlich sind. Naheliegendste Abhilfemöglichkeit wäre somit, die Faulzeit soweit zu verlängern, bis alle organische Substanz abgebaut ist und keinerlei Faulgas meht entstehen kann. Dieser Weg scheidet aber aus Kostengründen aus, weil erfahrungsgemäß der Faulprozeß auch nach mehreren Monaten, ja sogar Jahren noch nicht vollständig beendet ist.

Eine andere Möglichkeit bestünde darin, den biologischen Prozeß der anaeroben Faulung gewaltsam zu unterbrechen, z.B. durch Zugabe von Giftstoffen oder durch physikalische Methoden, etwa starkes Erwärmen. Alle diese Wege sind aber – sei es aus Umweltschutz- oder aus Kostengründen – nicht gangbar.

Aber selbst wenn es gelänge, den Faulprozeß zum Stillstand zu bringen, müßten die im Faulschlamm unter Druck gelösten Gase aus diesem entfernt werden, bevor eine Schwerkrafteindickung erfolgen kann. Bekanntlich wird der Faulschlamm aus den oft mehrere 1000 m³ großen und bis zu 30 m hohen Faulräumen am unterden Punkt entnommen, um ein Ansammeln von Sand und ähnlichen, leicht sedimentierenden Stoffen am Boden der Faulräume zu vermeiden. Infolgedessen steht der Faulschlamm vor seiner Entnahme unter einem Druck von bis zu 4 bar absolut. Entsprechende Faulgasmengen sind in ihm gelöst. Bei der Überleitung des ausgefaulten Faulschlammes aus dem Faulraum in den Nacheindicker erniedrigt sich der Druck auf atmosphärische Bedingungen, d.h. etwa 1 bar absolut. Dabei werden die gelösten Gase mindestens teilweise frei. Da in der Regel nicht einmal Vorrichtungen zur Abtrennung der so freigesetzten Gasblasen vorhanden sind, gelangt ein Schlamm-Gasgemisch in den Eindicker, das das Absetzen, insbesondere in seinem Einlaufbereich, erheblich behindert und zur Schwimmschlammdecken-Bildung beiträgt. Dazu kommt nachfolgend die bereits oben beschriebene, weitere biologische Aktivität und das daraus resultierende Nachgasen des Schlammes.

Ein Verfahren zur Vakuumentgasung von Abwasserschlamm wird bereits in DE-OS 21 20 032 erwähnt, doch werden keine konkreten Angaben zu technischen Durchführung der Entgasung und der Eindickung gemacht. Außerdem wird lediglich eine Verbesserung der mechanischen Entwässerungseigenschaften, d.h. für eine Filtration oder eine Zentrifugation, angestrebt. Beispielsweise wird auf Seite 8 der DE-OS 21 20 032 als Ziel der Erfindung genannt, "ein Verfahren zu entwickeln, das eine beträchtliche Verminderung dieses Wasseranteils in den Filterrückständen ermöglicht". Auf Seite 11 heißt es : "Das Verfahren ist insbesondere dadurch gekennzeichnet, daß vor dem Dehydratisieren auf mechanischem Wege, vor dem Filtern und Zentrifugieren, der Schlamm entgast wird, und zwar im Vakuum und in der Regel bei Umgebungstemperatur". Die DE-OS 21 20 032 bezieht sich also nicht auf eine Entgasung mit dem Ziel, das Eindicken von z.B. Faulschlämmen zu ermöglichen, indem das Aufschwimmen des Schlammes unterbunden wird, weil Gasblasen vorher entfernt wurden. Dieses Phänomen wird in der erwähnten DE-OS nicht beschrieben, so daß es daraus weder bekannt war noch daraus entnommen werden konnte. Eine Vorrichtung zur Durchführung des Verfahrens wird in DE-OS 21 20 032 nicht beschrieben.

Aus der anaeroben Abwasserreinigung ist bekannt, das Belebtschlamm-Abwasser-Gemisch zur Verbesserung seines Sedimentationsverhaltens durch Entgasung von anhängenden Hasblasen zu befreien, z.B. durch Strippen mit Luft (Zuckerindustrie 109 (1984) S. 133) oder durch Vakuum-Entgasung (Wat. Pollut. Control 1981, S. 285/286). In der auf die Entgasung folgenden Absetzstufe wird die Aufenthaltszeit des Schlammes nach der ersten Literaturstelle bewußt auf 10-20 Minuten begrenzt, um Flotation infolge erneuter Gasbildung zu vermeiden. Auch im zweiten Falle beträgt die Aufenthaltszeit weniger als eine Stunde. Es läßt sich nämlich rechnerisch nachweisen, daß erneute Blasenbildung schon nach Minuten, höchstens wenigen Stunden beginnt, da die Lösungskapazität des Wassers, selbst wenn nahezu vollständig entgast worden ist, insbesondere für Methan, nur gering ist.

Bei der Abscheidung von Belebtschlammflocken wird im wesentlichen ein feststoffarmer Überlauf, eine Klärung, angestrebt; dieser Vorgang läßt sich tatsächlich in dem notwendigen kurzen Zeitraum durchführen. Bei der Eindickung von Schlämmen ist es jedoch das Hauptziel, eine möglichst hohe Feststoffkonzentration zu erreichen, wobei die Klarheit des Überlaufs nur von untergeordneter Bedeutung ist. Zu befriedigenden Eindickung sind aber wesentlich größere Zeiträume erforderlich, wenigstens einige Stunden bis zu mehreren Tagen. In dieser Zeit kommt es mit Sicherheit zu erneuter Blasenbildung, so daß eine der Faulschlamm-Eindickung vorgeschaltete Entgasungsstufe an sich nicht sinnvoll erscheint. Somit ist nach dem Stand der Technik eine Vakuumentgasung von Faulschlamm nicht erfolgversprechend.

Aufgabe der Erfindung ist es, ein Verfahren und eine Einrichtung zu schaffen, mit denen die Eindickung von ausgefaultem Klärschlamm verbessert werden kann.

Diese Aufgabe wird durch die Merkmale des Anspruches 1 gelöst.

Es hat sich überraschend gezeigt, daß insbesondere in den angegebenen Druckbereichen dadurch eine befriedigende Faulschlamm-Eindickung erzielt werden kann. Der so behandelte Faulschlamm gibt Gasblasen, die sich neu bilden, leicht ab, so daß es nicht zu einem Aufschwimmen von nennenswerten Schlammteilen kommt.

Besonders vorteilhaft ist ein Energieeintrag in den Schlamm im unter dem Vakuum stehenden Bereich. Dadurch wird die Ausgasung beschleunigt und vervollständigt. Die vom Energieeintrag ausgelöste und die verbesserte Ausgasung bewirkende Verwirbelung kann durch Rührung mit unmittelbarem Energieeintrag geschehen oder auch auf andere Weise, z.B. mit mittelbarem Energieeintrag durch einen auf den Schlamm vorher aufgebrachten bzw. durch eine Pumpe erhöhten Druckunterschied, der in den Vakuumbereich hineintransportiert wird. Es ist ferner bevorzugt, durch entsprechende Anordnung des Leitungsstücks zwischen Druckreduzierorgan und Stoffaustauschapparat dafür zu sorgen, daß die Ausgasung nicht schon in diesem Leitungsstück beginnt, weil sonst durch stoßartige Vorgänge der Prozeß gestört und die Anlage beeinträchtigt werden könnte.

Es hat sich ferner als zweckmäßig erwiesen, das anfallende, auf annäherungsweise Atmosphärendruck verdichtete Abgas dem Faulgas zuzumischen, da der Methangehalt des Abgases überraschenderweise deutlich höher liegt, als nach dem Verhältnis der Löslichkeiten zu erwarten ist. Hierdurch wird vermieden, daß wertvolles Brenngas verlorengeht und Geruchsprobleme entstehen, wie es der Fall bei direkter Ableitung des Gases in die Atmosphäre wäre.

Weitere Vorteile und Merkmale der Erfindung ergeben sich außer aus den Unteransprüchen aus der Beschreibung und Zeichnung, wobei diese Merkmale für sich und in Kombination miteinander vorteilhafte Ausführungen ergeben können. In der Zeichnung zeigen:

Fig. 1 eine schematische Darstellung einer Einrichtung, die zur Durchführung des Verfahrens geeignet ist,

Fig. 2 einen schematischen Schnitt durch einen zur Einrichtung nach der Erfindung gehörenden Stoffaustauschapparat,

Fig. 3 und 4 schematische Schnitte durch zwei Ausführungsformen der Vorrichtung,

Fig. 5 und 6 Möglichkeiten der Niveauregelung im Blasenabscheider, und

Fig. 7 eine mögliche Durchsatzregelung der Einrichtung.

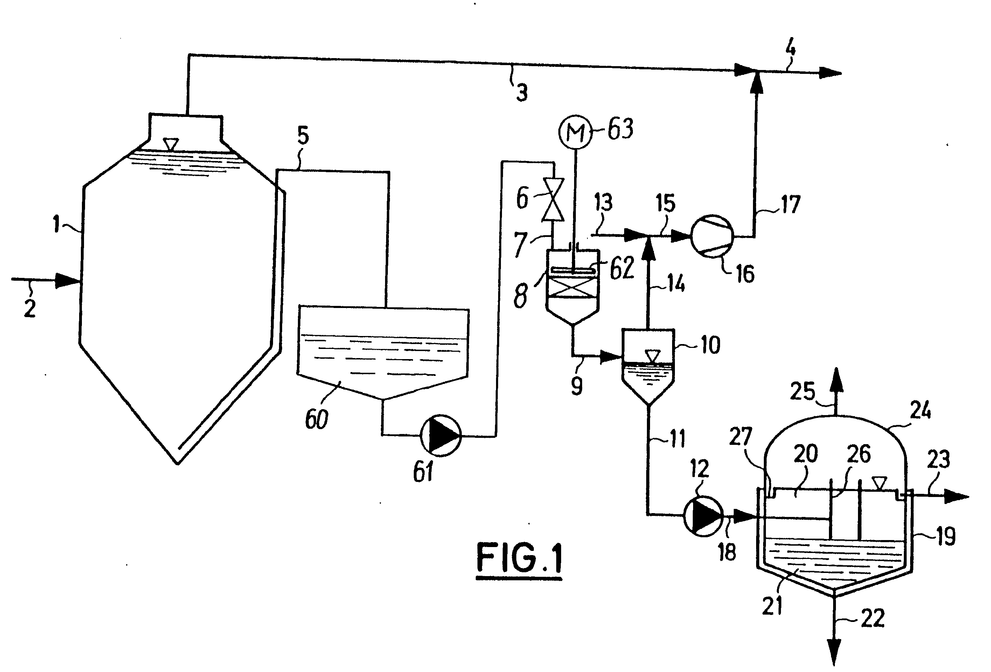

Der Faulbehälter 1 wird der Rohschlamm über die Leitung 2 aus dem nicht dargestellten Klärwerk zugeführt, Fig. 1. Das entsprechende Faulgas gelangt über Leitungen 3 und 4 zu den Verbrauchern. Faulschlamm fließt aus einem Faulbehälter 1 über eine Leitung 5, einen Zwischenbehälter 60, ein Entspannungsventil 6 und eine Leitung 7 in einem Stoffaustauschapparat 8, von dort über eine Leitung 9 in einen Blasenabscheider 10, weiter über eine Pumpe 12, die den Faulschlamm durch eine Leitung 18 in einen Eindicker 19 fördert. Der niveaugeregelte Zwischenbehälter 60, in den der Schlamm aus dem Faulbehälter 1 unter Schwerkraft fließen kann, entkoppelt den nachgeschalteten Anlagenteil von dem periodischen Beschickungszyklus des Faulbehälters und erhöht damit den möglichen Durchsatz und die Flexibilität der Gesamtanlage. Aus ihm wird der Schlamm, je nach der Höhenanordnung der Anlagenteile, über eine Förderpumpe 61 oder unmittelbar zu dem als Druckreduzierorgan wirkenden Entspannungsventil geleitet, das nahe am Einlaß bzw. Kopf des Stoffaustauschapparates 8 angeordnet ist. Der Einlaß der dadurch kurzen Leitung 7 liegt am höchsten Teil des Stoffaustauschapparates 8 und damit liegt das Entspannungsventil 6 wesentlich über dem Schlammniveau darin.

Obwohl an sich kurz hinter dem Ventil 6 in der Leitung 7 spontan die ersten Gasblasen im Faulschlamm entstehen würden, da durch die Druckabsenkung im Ventil 6 die Löslichkeit des Schlammes für das Faulgas erheblich unterschritten wurde, kann dadurch noch keine wesentliche Ausgasung vor dem Stoffaustauschapparat 8 erfolgen, die sonst in längeren Leitungen, insbesondere Steigleitungen, für Druckstöße oder Schwingungen sorgen würde. Das neue Gleichgewicht wird jedoch bei weitem nicht erreicht. Dazu muß im Apparat 8 durch Vergrößerung der Phasengrenzfläche und Turbulenz der Stoffaustausch intensiviert werden. Zur weitgehenden Trennung der Gasblasen vom Schlamm dient der Blasenabscheider 10, in dem durch Einhalten einer möglichst laminaren Strömung die noch vorhandenen größeren Blasen zur Oberfläche aufsteigen können. Der Stoffaustausch, d.h. das Ausgasen, wird besonders durch einen Energieeintrag angeregt, der möglichst am Beginn des Weges des Schlamms durch den Vakuumbereich erfolgen sollte. Er kann durch einen von einem Motor 63 angetriebenen Rührer 62, besondere Verwirbelungsmaßnahmen, z.B. in der Leitung 7 oder an ihrem Eintritt in den Stoffaustauschapparat 8, oder durch entsprechende Ausnutzung von Entspannungsvorgängen bewirkt werden.

Aus dem Schlamm entferntes Gas muß sowohl über die Leitung 13 aus dem Behälter 8 als auch über die Leitung 14 aus dem Behälter 10 abgezogen werden. Hierzu dient die Vakuumpumpe 16, die aus der gemeinsamen Leitung 15 in die Leitung 17 und – sofern gewünscht – in die Faulgassammelleitung 4 fördert.

Bei günstigen örtlichen Verhältnissen kann es möglich sein, den Blasenabscheider 10 beispielsweise 10 m über dem Flüssigkeitsniveau im Eindicker 19 aufzustellen. In diesem Falle würde der Schlamm auch bei hohem Unterdruck allein infolge der Schwerkraft über die Leitungen 11 und 18 in den Eindicker 19 fließen, so daß diese Anordnung die Druckerhöhungseinrichtung bilden würde. Die in Fig. 1 dargestellte Pumpe 12 könnte dann entfallen.

Wird der Stoffaustauschapparat 8 z.B. 6 m über dem Niveau im Faulbehälter 1 aufgestellt und in ihm ein Druck von etwa 0,4 bar absolut aufrechterhalten, so fließt im Faulschlamm von selbst in dem Maße aus dem Faulbehälter 1 über die Leitungen 5 und 7 zu, wie Rohschlamm über die Leitung 1 in den Faulbehälter 1 gepumpt werden ; auf das Ventil 6 sowie auf die noch zu beschreibende Durchsatzregelung kann dann verzichtet werden.

Der Schwerkrafteindicker 19 besteht in aller Regel aus einem runden Betonbehälter mit Vorrichtungen 26 zur gleichmäßigen Einleitung des entgasten Faulschlammes, mit einer Überlaufrinne für das Dekantat 27 und einem Bodenabzug 22 für den eingedickten Schlamm. Häufig ist auch ein – in Fig. 1 nicht dargestelltes – Krählwerk zur Unterstützung des Eindickvorganges vorhanden. Der Flüssigkeitsinhalt unterteilt sich in eine Klarwasserzone 20 und eine Schlammzone 21. Beide Zonen sind mehr oder weniger scharf voneinander getrennt.

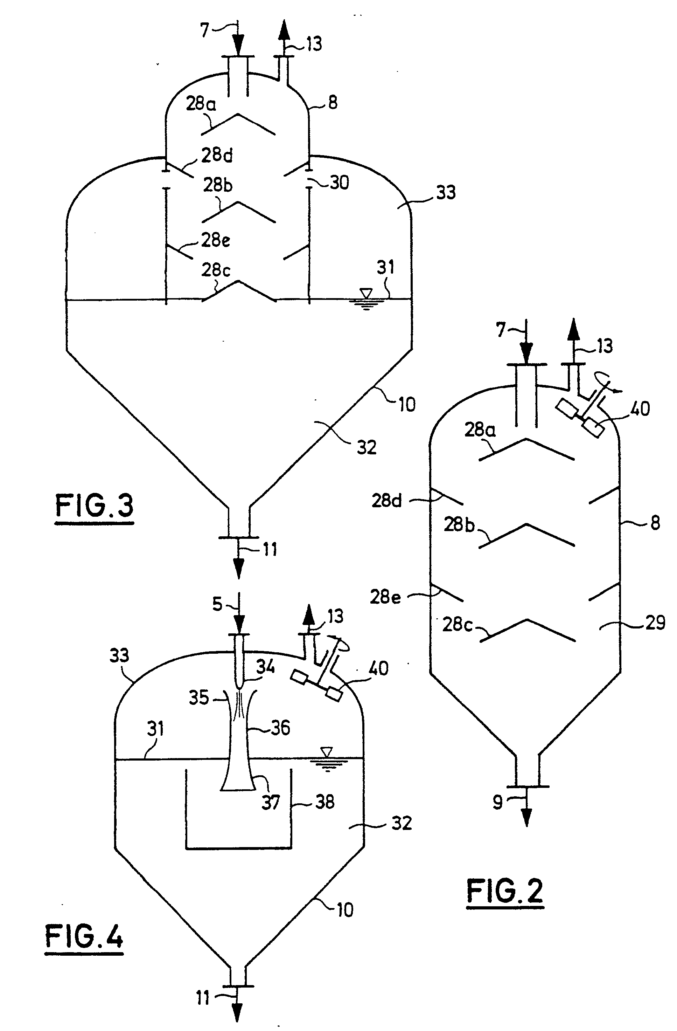

Die Bemessung des Eindickers 19 erfolgt nicht anders als bisher über die sogenannte Feststoffbeschickung, wobei ein Wert von 50 kg TS/m²d als normal anzusehen ist. Sind beispielsweise 15 m³/h Faulschlamm mit einem Feststoffgehalt von 3%, entsprechend rund 30 kg/m³, einzudicken, so ist eine Flüssigkeitsoberfläche von 216 m² erforderlich. Der Durchmesser eines runden Eindickers wäre 16,6 m. Nimmt man vereinfachend an, daß die mittlere Feststoffkonzentration in der Schlammschicht 4,5% TS oder etwa 45 kg/m³ ist und daß dazu eine Aufenthaltszeit der Feststoffe von 1 d notwendig ist, so ergibt sich die einzuhaltende Höhe der Schlammzone 21 über dem (als eben gedachten) Boden des Eindickers zu 1,1 m. Bei einer Aufenthaltszeit von 1 d bilden sich erfahrungsgemäß im Eindicker wieder Glasblasen, die aber wegen der andersartigen Schlammkonsistenz nach Entgasung zur Oberfläche aufsteigen, ohne nennenswerte Feststoffe zu flotieren. Es kann manchmal sinnvoll sein, zur Vermeidung von Geruchsemissionen den Eindicker mit seiner Abdeckhaube 24 zu versehen, diese unter Unterdruck zu setzen und die über die Leitung 25 abgesaugte Abluft einer Desodorierung zuzuführen. Eine mögliche Ausbildungsform des Stoffaustauschapparates zeigt Fig. 2.

Der Schlamm tritt über die Leitung 7 am oberen Teil des Behälters 8 ein und durchströmt diesen im wesentlichen in vertikaler Richtung. Im Behälter sind Einbauten 28a bis 28e in Form von abgeschrägten Flächen oder Platten vorhanden, die den Schlamm bei seinem Durchlaufen in der im wesentlichen vertikalen Strömungsrichtung umlenken und die notwendige Stoffaustauschfläche erzeugen.

Diese Einbauten sind vorteilhaft in einem Winkel zwischen 10° und 30° abwärts, also gegenüber der Horizontalen und in Strömungsrichtung geneigt. Der Winkel kann zwischen 5° und 45° variieren. Der Boden des Behälters hat die Form eines Trichters und ist gegenüber der Horizontalen um einen Winkel von über 45° geneigt, um Feststoffablagerungen in diesem Bereich zu vermeiden.

Im Gasraum 29 sammelt sich ein Teil des freigesetzten Gases und wird über die Leitungen 13 und 15 und die Pumpe 16 in die Faulgasleitung 4 eingespeist. Zur Vermeidung der Absaugung von Schaum ist ein mechanischer Schaumbrecher 40, beispielsweise mit einem an sich bekannten drehbaren Schaumbrecherarm angeordnet. Er ist in der Lage, auch stabilen Schaum zu zerstören. Vorteilhaft sollte der Schaumbrecher im Bereich der Absaugleitung 13 angeordnet sein.

In Fig. 3 ist die Kombination von Stoffaustauschapparat 8 und Blasenabscheider 10 in einem gemeinsamen Behälter dargestellt. Ein an seinem Boden offener Behälter 8 mit Einbauten, ähnlich den anhand Fig. 2 beschriebenen, ragt durch den Deckel des im Durchmesser größeren Blasenabscheide-Behälters 10 hindurch. Der Flüssigkeitsspiegel 31 im Blasenabscheider 10 sollte etwas über vom Behältermantel des Behälters 8 liegen und die untersten Einbauten 28c gerade berühren, um ein möglichst ruhiges Einströmen des über die Einbauten 28a bis 28c herabrieselnden Schlammes in die Flüssigkeit 32 zu gewährleisten. Gegebenenfalls können an dieser Stelle weitere Bleche zur Strömungsführung angebracht werden. Der Gasraum 33 über dem Flüssigkeitsspiegel 31 sollte nicht zu klein dimensioniert werden, um etwaigen Schaum ausreichend Zeit zum weitgehenden Zerfall zu geben. Gas kann aus dem Gasraum 33 über Löcher 30 im Mantel des Behälters 8 in den Stoffaustauschapparat 8 und von dort über die Leitung 13 abgezogen werden.

Fig. 4 zeigt eine andere Kombination von Stoffaustauschapparat und Blasenabscheider. Der Stoffaustauschapparat ist in diesem Falle ein an sich bekannter Flüssigkeitsstrahlsauger, der aus den Teilen Treibdüse 34, Fangdüse 35, Mischraum 36 und Diffusor 37 besteht. Die Druckreduzierung des in der Leitung 5 strömenden Schlammes erfolgt hierbei in der Treibdüse 34, wobei der Schlamm eine entsprechende Geschwindigkeit erhält. Dadurch wird Gas aus dem Gasraum 33 durch den Ringquerschnitt zwischen Treibdüse 34 und Fangdüse 35 angesaugt. Im Mischraum 36 vermischen sich Gas und zu entgasender Schlamm, wobei wegen der hohen Turbulenz ein intensiver Stoffaustausch stattfindet. Im Diffusor 37 wird ein Teil der kinetischen Energie des Gemisches wieder in Druckenergie umgewandelt. Der Umlenktopf 38 dient zur weiteren Beruhigung der Strömung. Die Seitenwände des Umlenktopfes enden direkt unterhalb des Flüssigkeitsspiegels 31, wodurch ein ruhiges Überströmen in den Blasenabscheider gewährleistet ist.

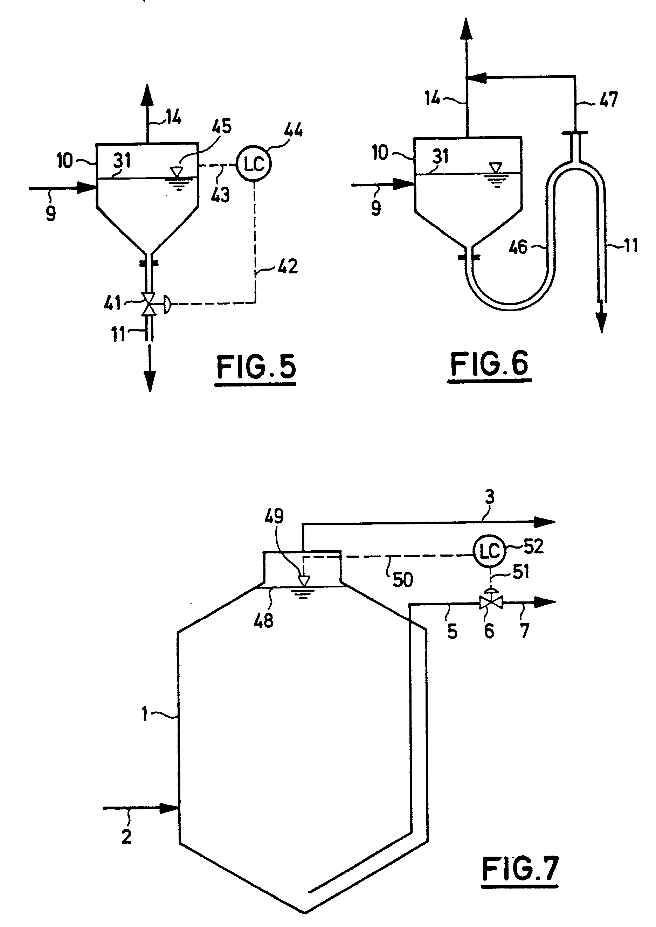

Aus dem Vorangegangenen wurde die Notwendigkeit einer Niveauregelung im Blasenabscheider 10 deutlich. Die Fig. 5 und 6 zeigen zwei verschiedene Möglichkeiten. Nach Fig. 5 wird in der Ablaufleitung 11 ein Regelventil 41 vorgesehen. Es wird gesteuert in Abhängigkeit vom Stand des Flüssigkeitsniveaus 31, der von einem Niveau-Aufnehmer 45 gemessen und vom Regler 44 verarbeitet wird. Die Geräte sind über Impulsleitungen 42, 43 miteinander verbunden. Die andere Möglichkeit nach Fig. 6 ist einfacher. Sie setzt voraus, daß die Ablaufleitung 11 nicht völlig mit Flüssigkeit gefüllt ist, wozu neben anderen eine gasseitige Verbindungsleitung 47 erforderlich ist. Durch den Schwanenhals 16 bleibt immer ein relativ konstantes Flüssigkeitsniveau 31 erhalten.

Fig. 7 zeigt den Faulbehälter 1 mit einer Einrichtung zur Regelung des Schlammdurchsatzes der Entgasungsanlage, der zweckmäßigerweise in Abhängigkeit vom Schlammspiegel 48 im Faulbehälter 1 gesteuert wird. Hierzu dienen beim Ausführungsbeispiel das Faulschlammniveau im Faulbehälter 1 abführende Niveaugeber 49, Regler 52 und Impulsleitungen 50 und 51.

## Ansprüche

1. Verfahren zur Behandlung von ausgefaultem Klärschlamm, dadurch gekennzeichnet, daß der Schlamm einem Vakuum von 0,05 bis 0,7 bar, vorzugsweise 0,1 bis 0,5 bar absolut unterworfen und anschließend mindestens drei Stunden lang durch Schwerkrafteinwirkung eingedickt wird.

2. Verfahren nach Anspruch 1, gekennzeichnet durch einen Energieeintrag in den unter dem Vakuum stehenden Schlamm, wobei der Energieeintrag insbesondere nahe dem Beginn der unter Vakuum durchflossenen Strecke vorgenommen wird und vorzugsweise durch Verwirbelung, Rührung o.dgl. mit bevorzugter Energiebeaufschlagung von außen erfolgt.

3. Verfahren nach Anspruch 1 oder 2, dadurch gekennzeichnet, daß das bei der Vakuumentgasung anfallende, auf annäherungsweise Atmosphärendruck verdichtete Abgas dem Faulgas zugemischt wird und/oder daß die Schwerkrafteindickung bei Atmosphärendruck unter Abzug des dort entstehenden Faulgases durchgeführt wird.

4. Verfahren nach einem der Ansprüche 1 bis 3, dadurch gekennzeichnet, daß der Anlagendurchsatz in Abhängigkeit vom Flüssigkeitsniveau im Faul- oder einem Zwischenbehälter durch Veränderung des freien Querschnittes eines Druckreduzierorgans geregelt und vorzugsweise vom Beschickungszyklus des Faulbehälters entkoppelt wird.

5. Einrichtung zur Behandlung von ausgefaultem Klärschlamm, insbesondere zur Durchführung des Verfahrens nach einem der Ansprüche 1 bis 3, dadurch gekennzeichnet, daß zwischen Faulbehälter (1) und Schlammeindicker (19) nacheinander

   – ein Druckreduzierorgan (6),
   – ein Stoffaustauschapparat (8),
   – ein Blasenabscheider (10), und
   – eine Druckerhöhungseinrichtung

angeordnet sind, wobei am Stoffaustauschapparat (8) und Blasenabscheider (10) eine Vakuumpumpe (16) angeschlossen ist, die ggf. in eine vom Faulbehälter (1) kommende Faulgasleitung (3, 4) fördert und/oder daß Mittel zur Energieeinbringung in den Schlamm im Bereich zwischen Druckreduzierorgan (6) und Druckerhöhungseinrichtung und/oder Mittel zum Verhindern bzw. Reduzieren einer Gasentwicklung in einer Leitung (7) zwischen Druckreduzierorgan (6) und Stoffaustauschapparat (8) vorgesehen sind.

6. Einrichtung nach Anspruch 5, dadurch gekennzeichnet, daß die Mittel zum Verhindern bzw. Reduzieren einer Gasentwicklung eine gegenüber dem Druckreduzierorgan (6) und insbesondere auch gegenüber dem Faulbehälter (1) und/oder einem Zwischenbehälter (60) geodätisch niedrigere Anordnung des Stoffaustauschapparates (8) und insbesondere seines Schlammniveaus und/oder eine Anordnung des Druckreduzierorgans (6) nahe beim Eintritt, der vorzugsweise im höchsten Abschnitt des Stoffaustauschapparates (8) liegt, enthalten.

7. Einrichtung nach Anspruch 5 oder 6, dadurch gekennzeichnet, daß die Mittel zur Energieeinbringung einen im Bereich des Stoffaustauschapparates (8) vorgesehenen Rührer, eine ggf. auch dem Druckreduzierorgan vorgeschaltete Förderpumpe (61) oder Verwirbelungsorgane enthalten.

8. Einrichtung nach einem der Ansprüche 5 bis 7, dadurch gekennzeichnet, daß zwischen Faulbehälter (1) und Druckreduzierorgan (6) ein Zwischenbehälter (60) und vorzugsweise zwischen dem Zwischenbehälter (60) und dem Druckreduzierorgan (6) eine Förderpumpe zwischengeschaltet ist.

9. Einrichtung nach einem der Ansprüche 5 bis 8, dadurch gekennzeichnet, daß der Stoffaustauschapparat (8) aus einem von oben nach unten durchströmten, vakuumfesten Behälter besteht, der vom Schlamm überströmte, glatte Einbauten (28a bis 28e) enthält, die in einem Winkel zwischen 5° und 45°, vorzugsweise zwischen 10° und 30°, zur Horizontalen und in Strömungsrichtung geneigt sind und/oder die Oberflächenbeschickung des Blasenabscheiders (10) zwischen 2 und 40 m³/m²h, vorzugsweise zwischen 5 und 20 m³/m²h, liegt, wobei insbesondere der Boden von Stoffaustauschapparaten (8) und/oder Blasenabscheider (10) in einem Winkel von mindestens 45° zur Horizontalen geneigt sind.

10. Einrichtung nach einem der Ansprüche 5 bis 9, dadurch gekennzeichnet, daß im Gasraum des Stoffaustauschapparates (8) und/oder des Blasenabscheiders (10) bzw. in den daraus angeschlossenen, das Faulgas ableitenden Leitungen (13, 14, 15) ein mechanischer Schaumzerstörer (40) angeordnet ist, wobei der Stoffaustauschapparat (8) und Blasenabscheider (10) ggf. in einem gemeinsamen vakuumfesten Behälter untergebracht sind.

11. Einrichtung nach einem der Ansprüche 5 bis 10, dadurch gekennzeichnet, daß Druckreduzierorgan (6) und Stoffaustauschapparat (8) als Strahlsauger ausgebildet sind, in dem unter Ausnutzung der Druckenergie des zu entgasten Schlammes und unter Rücksaugen von bereits freigesetztem Gas der Stoffaustausch durchgeführt wird.

12. Einrichtung nach einem der Ansprüche 5 bis 11, dadurch gekennzeichnet, daß die Druckerhöhungseinrichtung (12) eine Anordnung mit ausreichendem Höhenunterschied zwischen Blasenabscheider 10) und Eindicker (19) enthält, wobei die Schlammmförderung in der Leitung (11, 18) durch die Schwerkraft erfolgt und/oder daß die Druckerhöhungseinrichtung (12) eine Pumpe ist.

13. Einrichtung nach einem der Ansprüche 5 bis 12, dadurch gekennzeichnet, daß das Flüssigkeitsniveau (31) im Blasenabscheider (10) mit Hilfe eines in Abhängigkeit vom Niveau gesteuerten Regelventils (41) aufrechterhalten wird und/oder mit Hilfe eines Überlaufes (46) aufrechterhalten wird.

## Claims

1. Process for the treatment of digested sewage sludge, characterized in that the sludge is subjected to a vacuum of 0.05 to 0.7 and preferably 0.1 to 0.5 bar absolute and subsequently is thickened for at least 3 hours by gravity action.

2. Process according to claim 1, characterized by an energy introduction into the sludge under vacuum, the energy introduction in particular being carried out close to the start of the section through which the flow takes place under vacuum and preferably by turbulence, stirring, etc. with preferred energy transfer from the outside.

3. Process according to claims 1 or 2, characterized in that the waste gas obtained during vacuum deaeration and compressed to approximately atmospheric pressure is admixed with the digester gas and/or that the gravity thickening is carried out at atmospheric pressure after drawing off the digester gas formed there.

4. Process according to one of the claims 1 to 3, characterized in that the plant throughput is regulated as a function of the liquid level in the digester or an intermediate tank by modifying the free cross-section of a pressure reducing member and is preferably decoupled from the digester charging or feed cycle.

5. Apparatus for the treatment of digested sewage sludge, particularly for performing the process according to one of the claims 1 to 3, characterized in that between the digester (1) and the sludge thickener (19) are successively provided a pressure reducing member (6), a material exchange apparatus (8), a bubble separator (10) and a pressure raising device, in which to the material exchange apparatus (8) and bubble separator (10) is connected a vacuum pump (16), which optionally feeds into a digester gas pipe (3, 4) from the digester (1) and/or that means are provided for introducing energy into the sludge in the area between the pressure reducing member (6) and pressure raising device and/or means are provided for preventing or reducing the evolution of gas in a pipe (7) between the pressure reducing member (6) and the material exchange apparatus (8).

6. Apparatus according to claim 5, characterized in that the means for preventing or reducing a gas evolution contain a geodetically lower arrangement of the material exchange apparatus (8) and in particular its sludge level compared with the pressure reducing member (6) and particularly compared with the digester (1) and/or an intermediate tank (60), and/or an arrangement of the pressure reducing member (6) close to the inlet, which is preferably located in the highest part of the material exchange apparatus (8).

7. Apparatus according to claims 5 or 6, characterized in that the energy introduction means contain a stirrer located in the vicinity of the material exchange apparatus (8), a feed pump (61) optionally connected upstream of the pressure reducing member, or turbulence-inducing members.

8. Apparatus according to one of the claims 5 to 7, characterized in that between the digester (1) and the pressure reducing member (6) is provided an intermediate tank (60) and preferably between the latter and the pressure reducing member (6) is interposed a feed pump.

9. Apparatus according to one of the claims 5 to 8, characterized in that the material exchange apparatus (8) comprises a vacuum-tight container through which a flow takes place from top to bottom and which contains sludge-overflowed, smooth components (28a to 28e), which are inclined at an angle between 5 and 45°, preferably between 10 and 30° to the horizontal and in the flow direction and/or the surface charging of the bubble separator (10) is between 2 and 40 m³/m²h, preferably between 5 and 20 m³/m²h and in particular the bottom of the material exchange apparatuses (8) and/or bubble separators (10) are inclined at an angle of at least 45° to the horizontal.

10. Apparatus according to one of the claims 5 to 9, characterized in that a mechanical froth or scum breaker (40) is located in the gas chamber of the material exchange apparatus (8) and/or the bubble separator (10) or in the digested gas – draining pipes (13, 14) emanating therefrom, the material exchange apparatus (8) and the bubble separator (10) being optionally housed in a common vacuum-tight container.

11. Apparatus according to one of the claims 5 to 10, characterized in that the pressure reducing member (6) and material exchange apparatus (8) are constructed as jet suction means, material exchange being carried out utilizing the pressure energy of the sludge to be deaerated and accompanied by the sucking back of already released gas.

12. Apparatus according to one of the claims 5 to 11, characterized in that the pressure raising device (12) contains an arrangement with an adequate height difference between the bubble separator (10) and the thickener (19), the sludge conveying taking place by gravity in the pipe (11, 18) and/or in that the pressure raising device (12) is a pump.

13. Apparatus according to one of the claims 5 to 12, characterized in that the liquid level (31) in the bubble separator (10) is maintained with the aid of a regulating valve (41) controlled as a function of the level and/or with the aid of an overflow (46).

## Revendications

1. Procédé pour le traitement de boues d'épuration digérées, caractérisé par le fait que l'on soumet les boues à un vide de 0,05 à 0,7 bar absolu, et de préférence de 0,1 à 0,5 bar, et qu'on les épaissit ensuite par gravité pendant trois heures au moins.

2. Procédé selon la revendication 1, caractérisé par un apport d'énergie dans les boues soumises au vide, l'apport d'énergie étant pratiqué en particulier au voisinage du début du trajet parcouru sous vide et ayant lieu de préférence par mise en tourbillonnement, par agitation ou similaire, l'alimentation en l'énergie provenant de préférence de l'extérieur.

3. Procédé selon la revendication 1 ou 2, caractérisé par le fait que l'on mélange au gaz de digestion le gaz d'échappement qui est produit lors du dégazage sous vide et qui est comprimé approximativement à la pression atmosphérique et/ou par le fait que l'épaississement par gravité est réalisé à la pression atmosphérique en extrayant le gaz de digestion qui prend naissance à cet endroit.

4. Procédé selon l'une des revendications 1 à 3, caractérisé par le fait que l'on régule le débit de l'installation en fonction du niveau du liquide dans la cuve de digestion ou dans une cuve intermédiaire en modifiant la section transversale libre d'un organe de réduction de la pression, et qu'on le désaccouple de préférence du cycle de chargement de la cuve de digestion.

5. Dispositif pour le traitement de boues d'épuration digérées, en particulier pour la mise en oeuvre du procédé selon l'une des revendications 1 à 3, caractérisé par le fait que sont disposés l'un après l'autre entre la cuve de digestion (1) et l'épaississeur de boues (19) :
   – un organe de réduction de la pression (6),
   – un appareil de transfert de matière (8),
   – un séparateur de bulles (10), et :
   – un dispositif d'augmentation de la pression, cependant qu'est raccordée à l'appareil de transfert de matière (8) et au séparateur de bulles (10) une pompe à vide (16) qui débite le cas échéant dans une conduite de gaz de digestion (3, 4) provenant de la cuve de digestion (1) et/ou par le fait qu'il est prévu des moyens pour introduire de l'énergie dans les boues dans la région située entre l'organe de réduction de la pression (6) et le dispositif d'augmentation de la pression et/ou des moyens pour empêcher ou, respectivement, pour réduire un dégagement de gaz dans une conduite (7) située entre l'organe de réduction de la pression (6) et l'appareil de transfert de matière (8).

6. Dispositif selon la revendication 5, caractérisé par le fait que les moyens pour empêcher ou, respectivement, pour réduire un dégagement de gaz comprennent le fait que l'appareil de transfert de matière (8), et en particulier son niveau des boues, est disposé à un niveau par rapport à la terre qui est inférieur à celui de l'organe de réduction de la pression (6) et aussi, en particulier, à celui de la cuve de digestion (1) et/ou d'une cuve intermédiaire (60) et/ou par le fait que l'organe de réduction de la pression (6) est disposé au voisinage de l'entrée de l'appareil de transfert de matière (8) qui est située de préférence dans la partie la plus élevée de celui-ci.

7. Dispositif selon la revendication 5 ou 6, caractérisé par le fait que les moyens pour introduire de l'énergie comprennent un agitateur prévu dans la région de l'appareil de transfert de matière (8), une pompe de circulation (61) montée également en amont de l'organe de réduction de la pression, le cas échéant, ou des organes de mise en tourbillonnement.

8. Dispositif selon l'une des revendications 5 à 7, caractérisé par le fait qu'une cuve intermédiaire (60) est interposée entre la cuve de digestion (1) et l'organe de réduction de la pression (6), et qu'une pompe de circulation est de préférence interposée entre la cuve intermédiaire (60) et l'organe de réduction de la pression (6).

9. Dispositif selon l'une des revendications 5 à 8, caractérisé par le fait que l'appareil de transfert de matière (8) se compose d'une cuve étanche au vide, traversée de haut en bas et contenant des chicanes lisses (28a à 28e) sur lesquelles les boues s'écoulent et qui sont inclinées par rapport à l'horizontale et dans la direction de l'écoulement sous un angle compris entre 5° et 45°, et de préférence entre 10° et 30°, et/ou que l'alimentation en surface du séparateur de bulles (10) est comprise entre 2 et 40 m³/m²h, et de préférence entre 5 et 20 m³/m²h, cependant qu'en particulier, le fond des appareils de transfert de matière (8) et/ou du séparateur de bulles (10) est incliné par rapport à l'horizontale sous un angle d'au moins 45°.

10. Dispositif selon l'une des revendications 5 à 9, caractérisé par le fait qu'un brise-mousses mécanique (40) est disposé dans la chambre contenant les gaz de l'appareil de transfert de matière (8) et/ou du séparateur de bulles (10) ou, respectivement, dans les conduites (13, 14, 15) qui y sont raccordées et qui évacuent le gaz de digestion, l'appareil de transfert de matière (8) et le séparateur de bulles (10) étant logés le cas échéant dans une cuve commune étanche au vide.

11. Dispositif selon l'une des revendications 5 à 10, caractérisé par le fait que l'organe de réduction de la pression (6) et l'appareil de transfert de matière (8) sont réalisés sous la forme d'un injecteur dans lequel le transfert de matière est réalisé en utilisant l'énergie de la pression des boues à dégazer et en faisant recirculer le gaz déjà libéré.

12. Dispositif selon l'une des revendications 5 à 11, caractérisé par le fait que le dispositif d'augmentation de la pression (12) est disposé avec une différence de niveau suffisante entre le séparateur de bulles (10) et l'épaississeur (19), le déplacement des boues dans la conduite (11, 18) ayant lieu grâce à la pesanteur et/ou par le fait que le dispositif d'augmentation de la pression (12) est une pompe.

13. Dispositif selon l'une des revendications 5 à 12, caractérisé par le fait que le niveau (31) du liquide dans le séparateur de bulles (10) est maintenu à l'aide d'une soupape de régulation (41) commandée en fonction du niveau et/ou à l'aide d'un trop-plein (46).

FIG.1

EP 0 289 057 B1

FIG.3

FIG.4

FIG.2

**FIG.5**

**FIG.6**

**FIG.7**